# EUROPÄISCHE PATENTSCHRIFT

(11) **EP 0 300 439 B1**
(45) Veröffentlichungstag und Bekanntmachung des Hinweises auf die Patenterteilung: **10.11.1993**
(21) Anmeldenummer: 88111644.6
(22) Anmeldetag: 20.07.1988
(51) Int. Cl.: B04B 1/02, B04B 11/04

(54) **Vorrichtung zum Abscheiden von feinen Feststoffpartikeln**
Separating device for small solid particles
Dispositif de séparation de particules solides fines

(30) Priorität: 22.07.1987 DE 3724247
(43) Veröffentlichungstag der Anmeldung: 25.01.1989
(73) Patentinhaber: Dürr-Dental GmbH & Co. KG, D-74321 Bietigheim-Bissingen (DE)
(72) Erfinder: Bollmann, Andreas, D-7121 Ingersheim (DE); Hlawatsch, Dieter, D-7120 Bietigheim-Bissingen (DE); Hofmann, Hans-Joachim, D-7064 Remshalden 3 (DE); Schnepf, Jürgen, D-7100 Heilbronn (DE)
(74) Vertreter: Ostertag, Reinhard

(56) Entgegenhaltungen:
- EP-A- 0 108 983
- DE-A- 3 030 614
- DE-A- 3 536 624
- DE-B- 1 259 030
- DE-B- 1 264 346

## Beschreibung

Die Erfindung betrifft eine Vorrichtung zum Abscheiden von feinen Feststoffpartikeln, insbesondere Amalgampartikeln, aus Abwasser, mit
a) einer durch einen Antriebsmotor in Drehung versetzbaren Zentrifugentrommel,
b) einem die Zentrifugentrommel umgebenden Zentrifugengehäuse,
c) einem Sedimentierbehälter, der lösbar unterhalb des Zentrifugengehäuses angeordnet ist,
d) einer Einrichtung zum Rückfördern desjenigen Teiles der im Sedimentierbehälter befindlichen Flüssigkeit, der sich über einem vorgegebenen Pegel befindet, zum Zentrifugeneinlaß hin.

Eine derartige Vorrichtung ist in der DE-A-30 30 614 offenbart. Bei ihr wird die Höhe des Feststoffpartikel-Sedimentes im Sedimentierbehälter in der Praxis visuell kontrolliert, wozu letzterer aus durchsichtigem Material hergestellt ist.

In der DE-B-1 264 346 ist eine Zentrifuge zum Abscheiden von Spänen aus Öl beschrieben, die eine um eine horizontale Achse umlaufende Zentrifugentrommel aufweist, deren Umfangswand in einer senkrecht auf der Trommelachse stehenden Ebene geteilt ist, so daß die Trommel durch axiales Verfahren des einen Wandteiles geöffnet werden kann. Auf diese Weise kann der abgeschiedene Spänekuchen dann unter Schwerkraft- und Zentrifugalkrafteinwirkung auf einen darunterliegenden Förderer gelangen. Die Steuerung der Bewegung des beweglichen Wandteiles erfolgt unter Verwendung eines in der Umfangswand des Zentrifugengehäuses angeordneten Schalters, der anspricht, wenn er von Spänen oder von Öl getroffen wird. Das Wiederschließen der Zentrifugentrommel erfolgt unter Zeitsteuerung.

In der EP-A-0 108 983 ist ein Zyklon zur Verwendung an einem zahnärztlichen Arbeitsplatz beschrieben, der zum Abscheiden von Luftanteilen aus dem am Arbeitsplatz erhaltenen Gemisch aus Luft/Flüssigkeit/Feststoffpartikeln dient. Der Auslaß dieses Zyklones ist durch eine Pumpe und ein dieser nachgeschaltetes Rückschlagventil gebildet, wobei die Steuerung der Pumpe durch einen Pegeldetektor erfolgt, der im Zyklon angeordnet ist und anspricht, wenn das dort abgeschiedene Flüssigkeitsvolumen einen vorgegebenen Pegel erreicht. Hinter dem so gesteuerten Auslaß des Luft/Flüssigkeits-Trennzyklons ist ein Feststoffabscheider angeordnet, der nach Art eines Siphons ausgebildet ist.

In der DE-A-35 36 624 ist eine Anlage zum gesteuerten Austragen von Feststoffen oder Dickstoffen aus einem Separator beschrieben, die einen Viskositäts- oder Dichtesensor umfaßt, der an die Förderleitungen einer Dickstoff-Austragpumpe angeschlossen ist.

In der EP-A-0 263 344 ist eine Zentrifuge zum Abscheiden von feinen Feststoffpartikeln aus Abwasser beschrieben, bei der ein Sedimentierbehälter unterhalb einer Zentrifugentrommel angeordnet ist, deren Boden mit einer Schlammablauföffnung versehen ist. Im oberen Teil des Sedimentierbehälters sind auf den Flüssigkeitspegel ansprechende Fühler vorgesehen, deren Ausgangssignale eine Rückförderpumpe steuern, mit welcher überstehendes geklärtes Wasser ins Innere der Zentrifugentrommel zurückgespeist wird.

Durch die vorliegende Erfindung soll eine Abscheidevorrichtung der eingangs angesprochenen Art so weitergebildet werden, daß die Höhe des Sedimentes, welches sich im Laufe der Zeit im Sedimentierbehälter gebildet hat, auch dann sehr zuverlässig gemessen wird, wenn der Sedimentierbehälter durch Algenbildung oder dergleichen verschmutzt.

Diese Aufgabe ist erfindungsgemäß dadurch gelöst, daß
e) das Zentrifugengehäuse eine Anschlußplatte trägt, gegen welche das offene obere Ende des Sedimentierbehälters anlegbar ist, und
f) die Anschlußplatte eines Sedimenthöhen-Fühler trägt, welcher aufweist: eine auf einen vertikal geführten Tragstab aufgesetzte Fühlplatte, einen auf einen oberen Abschnitt des Tragstabes aufgesetzten Anker, eine mit dem letzteren zusammenarbeitenden Magnetspule, einen dem Tragstab zugeordneten Bewegungsdämpfer und einen mit dem Tragstab zusammenarbeitenden Stellungsgeber.

Die Fühlplatte eines wie oben angegeben ausgebildeten Sedimenthöhen-Fühlers läßt man zur Messung der Höhe des Sedimentes unter Schwerkrafteinwirkung gedämpft fallen und die Fühlplatte bleibt beim Auftreffen auf die Sedimentoberfläche stehen. Die dann angefundene Stellung des die Fühlplatte tragenden Tragstabes ist direkt ein Maß für die Sedimenthöhe.

Bei einer Weiterbildung der Erfindung arbeitet der Anker über eine Totgangverbindung auf den Tragstab. Hiermit wird erreicht, daß die Gesamtmasse der beim Meßvorgang nach unten fallenden Teile des Fühlers besonders klein ist. Man erhält also auch bei nur verhältnismäßig grob gepaßten Teilen des Dämpfers eine langsame Abwärtsbewegung der Fühlplatte.

Wird der Sedimenthöhen-Fühler so gestaltet, daß der Anker mit einer Führungs-Anschlaghülse verbunden ist, welche den Tragstab unter geringem Spiel umgibt und mit einem auskragenden Teil des Tragstabes zusammenarbeitet, und daß die Führungs/Anschlaghülse durch eine Feder in eine obere Stellung vorgespannt ist und durch Anziehen des Ankers durch die Magnetspule schnell absenkbar ist, so steht die Fühlerplatte normalerweise bei nicht erregter Magnetspule, nicht in Kontakt mit den Sediment. Die Fühlplatte steht damit in derjenigen Stellung, aus welcher heraus ein Meßzyklus gestartet wird. Das Einleiten eines Meßzyklus kann so nicht zum Aufwirbeln von Partikeln aus dem obersten Bereich des noch nicht gefestigten Sedimentes führen.

Bei einer weiteren Fortbildung der Erfindung ist vorgesehen, daß der Rand der Fühlplatte über einen Balg gegen die Anschlußplatte abgedichtet ist und der Balg-Innenraum über die geringes radiales Spiel aufweisenden Führungsmittel für den Tragstab und den Anker über das Fühlergehäuse entlüftet ist, wodurch der Bewegungsdämpfer gebildet ist. Damit wird erreicht, daß kein gesonderter Dämpfer benötigt wird. Der den Tragstab und das Innere des Fühlers gegen das Innere des Sedimentierbehälters abschottende Balg dient zugleich als Membranzylinder, der über die Führung für den Tragstab gedrosselt entlüftet ist.

Sieht man ferner vor, daß der Stellungsgeber einen auf dem Tragstab angeordneten Permanentmagneten und einen feststehenden Reed-Schalter aufweist, wobei letzterer so angeordnet ist, daß er vom Permanentmagneten dann ständig geschlossen gehalten wird, wenn der maximal zulässige Sedimentpegel im Sedimentierbehälter erreicht ist, und ist dieser Reed-Schalter der Zählklemme eines Zählers vorgeschaltet, erhält man auf sehr einfache Weise unterschiedliche Kontrollsignale für ordnungsgemäßes/fehlerhaftes Arbeiten des Fühlers bzw. Erreichen des maximal zulässigen Sedimentpegels.

Sieht man bei einer solchen Vorrichtung ferner vor, daß die Erregung der Magnetspule zusammen mit dem Einschalten des Hauptschalters für eine vorgegebene Zeitspanne erfolgt, so erfolgt die Füllstandskontrolle automatisch mit jedem Einschalten (in der Regel morgens). Ist der maximal zulässige Sedimentpegel überschritten, so kann die Vorrichtung zu diesem Zeitpunkt zwangsläufig abgeschaltet werden, um auf die Notwendigkeit des Austausches des Sammelbehälters nachdrücklich hinzuweisen, nachdem dann noch keine Behandlung läuft.

Nachstehend wird die Erfindung anhand eines Ausführungsbeispieles unter Bezugnahme auf die Zeichnung näher erläutert. In dieser zeigen:
- Figur 1:: eine axiale Schnittansicht einer Zentrifugeneinheit zum Abscheiden von Amalgampartikeln und anderen Feststoffen aus dem in einer Zahnarztpraxis anfallenden Abwasser, längs der Schnittlinie I-I von Figur 2;
- Figur 2:: einen axialen Schnitt durch die Zentrifugeneinheit nach Figur 1 längs der dortigen Schnittlinie II-II; und
- Figur 5:: einen axialen Schnitt durch einen Sedimenthöhen-Fühler der Zentrifugeneinheit in vergrößertem Maßstabe.

In der Zeichnung ist mit 10 insgesamt eine Zentrifugeneinheit bezeichnet, welcher über einen Schlauch 12 das an einem oder mehreren zahnärztlichen Arbeitsplätzen anfallende Abwasser zugeführt wird, das beim Ausbohren von Füllungen entstandene Amalgampartikel, Knochenpartikel, Zementpartikel usw. enthält, und welche von diesen Feststoffpartikeln gereinigtes Abwasser über einen Schlauch 14 an die Hauskanalisation abgibt.

Die Zentrifugeneinheit hat einen über Gummifüße 16 auf dem Boden ruhenden Rahmen 18, der seinerseits über Schwingungsdämpfer 20 eine Lagerplatte 22 trägt.

Auf der Lagerplatte 22 sitzt ein Elektromotor 24, auf dessen Welle 26 eine insgesamt mit 28 bezeichnete Zentrifugentrommel sitzt.

Die Zentrifugentrommel hat eine zylindrische Umfangswand 30 sowie eine kegelstumpfförmig nach unten verlaufende Bodenwand 32, deren freier Rand eine Ablauföffnung 34 begrenzt. Die Bodenwand 32 ist mit einem auf der Welle 26 sitzenden Nabenabschnitt 36 über eine Mehrzahl in Umfangsrichtung gleich verteilter Beschleunigungsflügel 38 verbunden, durch welche zwischen ihnen liegendes Wasser rasch auf die Trommeldrehzahl gebracht wird.

Auf die Unterseite eines Zuführstutzens 46 ist ein Speisepumpengehäuse 72 aufgesetzt, an dem wiederum ein gekrümmter Ansaugstutzen 74 hängt, auf welchem der Schlauch 12 befestigt ist.

Das Speisepumpengehäuse 72 begrenzt eine Pumpenkammer, in welcher ein ebenso wie die Zentrifugentrommel 28 mit der Motorwelle 26 verbundenes Pumpenlaufrad 76 umläuft, sowie eine Meßkammer 78, die über einen Anschlußstutzen 80 mit einem Druckschalter verbindbar ist, der das Ingangsetzen und Anhalten der Zentrifugeneinheit 10 steuert.

Eine Bodenwand 48 eines Zentrifugengehäuses 50 hat in einen tiefsten Bodenabschnitt 90, in welchem eine Ablauföffnung 92 vorgesehen ist.

Die Ablauföffnung 92 liegt über einem nach oben offenen abnehmbaren Sedimentierbehälter 94, der unter Zwischenschaltung einer umlaufenden Dichtung 96 fest gegen die Unterseite des Bodenabschnittes 90 und einer diesen in seitlicher Richtung verlängernden Anschlußplatte 98 gedrückt ist. Das Anschlußende des Sedimentierbehälters 94 und die Dichtung 96 umgebend, hat die Anschlußplatte 98 einen nach unten hängenden Flansch 100.

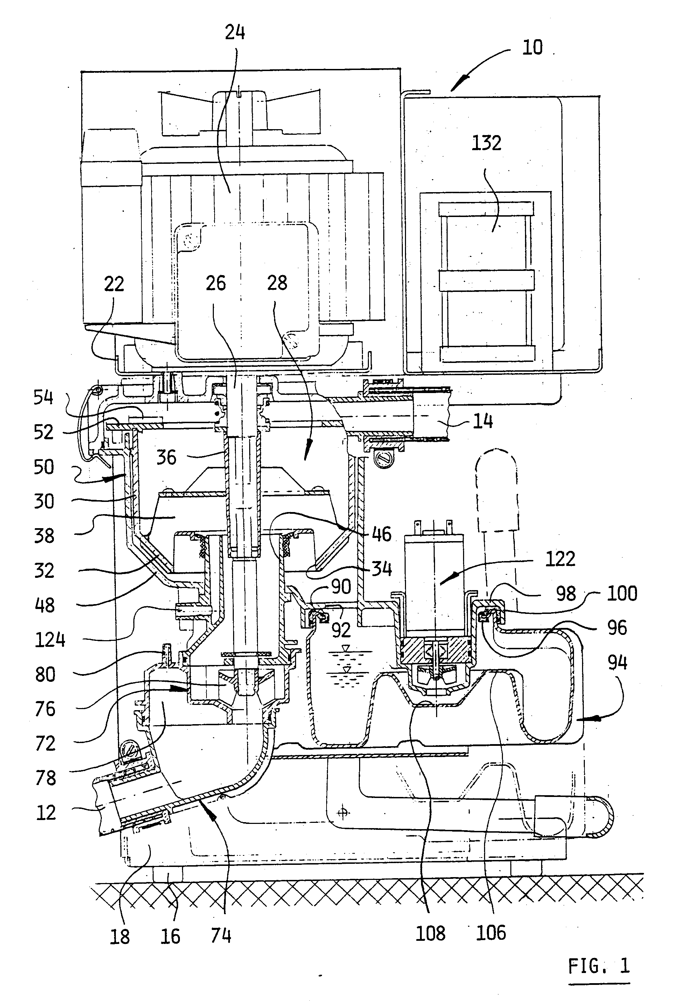

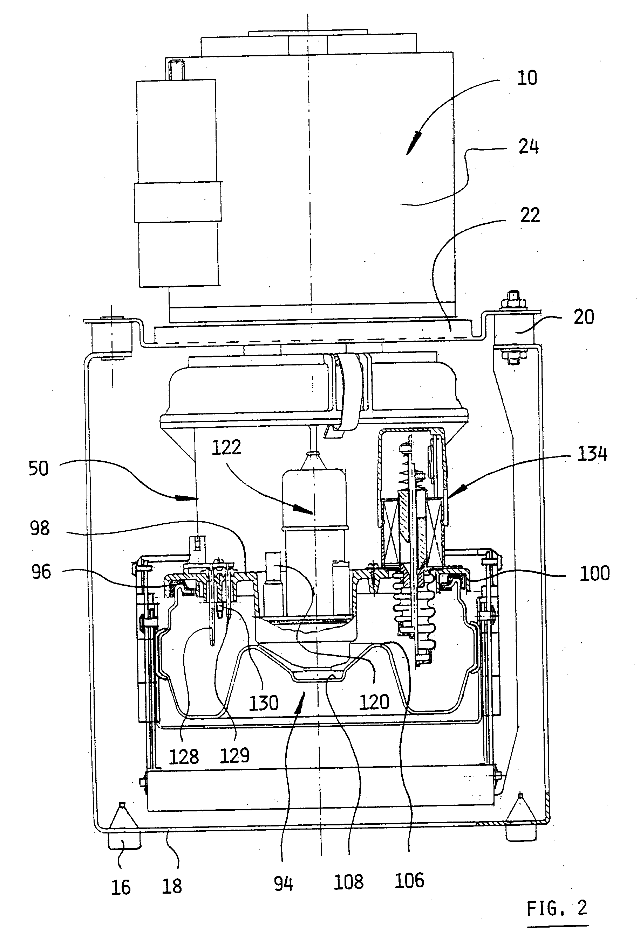

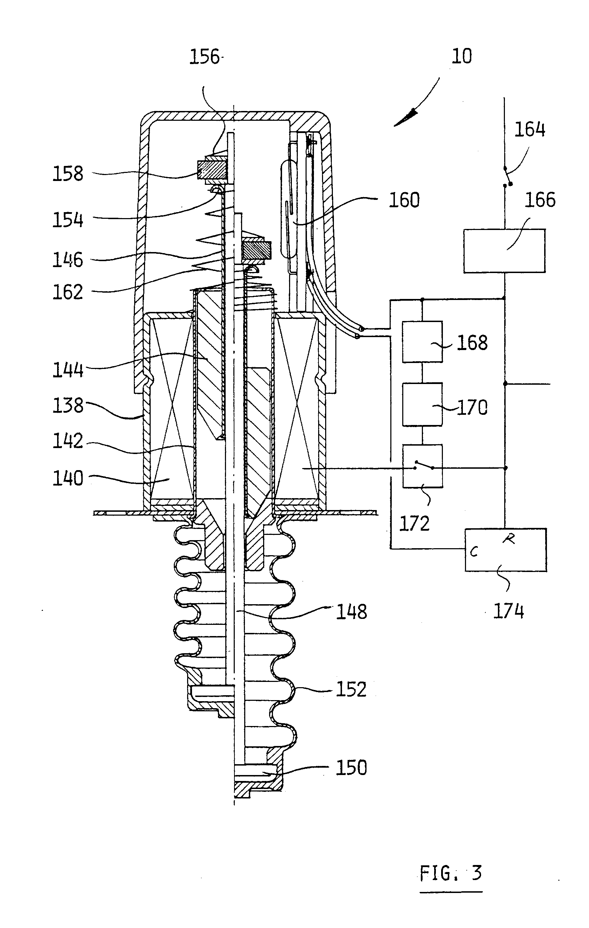

Der Sedimentierbehälter 94 ist durch Blasformen eines Kunststoffmateriales hergestellt und hat im einzelnen die aus den Figuren 1 und 2 ersichtliche Gestalt. Ein hochgezogener Bodenabschnitt 106 weist eine nach unten zurückspringende Wanne 108 auf, in welche das untere Ende einer Rückförderpumpe 122 derart eintaucht, daß es die Wanne 108 zum großen Teil ausfüllt und in Aufsicht gesehen im wesentlichen überdeckt. Ihr Auslaßstutzen 120 ist mit einem Einlaßstutzen 124 (vergl. Figur 1) verbunden, der zum Inneren des Zuführstutzens 46 führt.

Die Rückförderpumpe 122 arbeitet gesteuert durch drei Niveaufühler, zu denen drei von der Anschlußplatte 98 getragene Elektroden 128-130 gehören. Die Elektrode 128 taucht bis in Höhe des hochgezogenen Bodenabschnittes 106 in den Sedimentierbehälter 94 ein. Sinkt der Flüssigkeitsspiegel unter ihr unteres Ende, so wird die Rückförderpumpe 122 von der nur schematisch bei 132 angedeuteten Steuereinheit der Zentrifugeneinheit 10 angehalten. Steigt dagegen der Flüssigkeitsspiegel im Sedimentierbehälter 94 bis zum unteren Ende der Elektrode 129 an, so wird die Rückförderpumpe 122 eingeschaltet.

Die Elektrode 130 wird vom Flüssigkeitsspiegel nur dann erreicht, wenn der Druckschalter am Anschlußstutzen 80 nicht richtig auf Anstehen von zu reinigendem Wasser anspricht, und sie startet dann Zentrifuge und Rückförderpumpe (Notstart).

Im normalen Betrieb wird die Zentrifugeneinheit 10 eingeschaltet, wenn der mit dem Anschlußstutzen 80 verbundene Druckschalter anspricht. Verunreinigtes Abwasser wird dann durch das Pumpenlaufrad 76 ins Innere der rasch umlaufenden Zentrifugentrommel 28 gefördert, wo die Feststoffpartikel mitschleppende Flüssigkeit durch die Beschleunigungsflügel 38 rasch in Drehung versetzt wird. Auf der Umfangswand 30 werden die Feststoffpartikel unter der Einwirkung der Zentrifugalkraft abgeschieden, während das von ihnen befreite Wasser über einen Überlaufring 52 abströmt und von Pumpenflügeln 54 in den Schlauch 14 gedrückt wird.

Fällt kein Abwasser mehr am Arbeitsplatz an, so fällt der mit dem Anschlußstutzen 80 verbundene Druckschalter ab, und die Zentrifugeneinheit 10 wird abgeschaltet und zwangsgebremst. Mit abnehmender Trommeldrehzahl sinkt der noch in der Zentrifugentrommel 28 befindliche Wasserring zusammen mit dem an der Umfangswand 30 abgeschiedenen Partikelschlamm in der Zentrifugentrommel 28 nach unten und verläßt diese durch die Ablauföffnung 34. Über die Bodenwand 48 des Zentrifugengehäuses 50 gelangen die Restflüssigkeit und der abgeschiedene Schlamm durch die Ablauföffnung 92 in den Sedimentierbehälter 94, was zu einem entsprechenden Pegelanstieg in diesem Behälter führt.

Während der nun folgenden Ruhezeit der Zentrifugeneinheit 10 kann sich der aus dem Zentrifugengehäuse 50 abgeflossene Schlamm von der ebenfalls von dort abgeflossenen Flüssigkeit trennen, wobei das Ausmaß der Sedimentationstrennung von der Länge der Ruhezeit abhängt.

Wird die Zentrifugeneinheit 10 anschließend wieder durch Ansprechen des mit dem Anschlußstutzen 80 verbundenen Druckschalters in Gang gesetzt, so wird die Rückförderpumpe 122 eingeschaltet und senkt den Flüssigkeitsspiegel im Sedimentierbehälter 94 wieder auf das untere Niveau ab.

In einer Vielzahl aufeinanderfolgender Zentrifugier/Sedimentier-Zyklen, wie sie obenstehend gerade beschrieben wurden, baut sich über dem Boden des Sedimentierbehälters 94 ein Sediment aus Feststoffpartikeln auf. Um festzustellen, wann das aufgebaute Sediment die Nachbarschaft des hochgezogenen Bodenabschnittes 106 erreicht - dann muß der Sedimentierbehälter 94 gegen einen neuen ausgetauscht werden -, ist von der Anschlußplatte 98 ein insgesamt mit 134 bezeichneter Sedimenthöhen-Fühler getragen, dessen Einzelheiten unter Bezugnahme auf Figur 5 nachstehend nun erläutert werden.

Der Sedimenthöhen-Fühler 134 hat ein durch Schrauben 136 an der Anschlußplatte 98 festgelegtes Gehäuse 138, welches eine Magnetspule 140 aufnimmt. In die Magnetspule 140 ist eine Ankerführungshülse 142 eingesetzt, in welcher ein hülsenförmiger Anker 144 im Gleitspiel geführt ist. Der Anker 144 trägt seinerseits innenliegend eine Führungs/Anschlaghülse 146, in welcher ein Tragstab 148 im Gleitspiel geführt ist.

Der Tragstab 148 trägt an seinem-unteren Ende eine Fühlplatte 150, deren Rand in das untere Ende eines Gummibalges 152 eingeknöpft ist. Das obere Ende des Gummibalges 152 ist dicht mit der Unterseite des Gehäuses 138 verbunden.

Das obere Ende der Führungs/Anschlaghülse 146 ist kreisförmig umgebogen, wie bei 154 gezeigt. Der Endabschnitt 154 dient als Anschlag für ein Ringteil 156, welches auf das obere Ende des Tragstabes 148 fest aufgesetzt ist und zugleich als Haltering für einen Permanentmagneten 158 dient. Letzterer arbeitet mit einem in vorgegebener Axialstellung am Gehäuse 138 angebrachte Reed-Schalter 160 zusammen.

Das obere Ende der Ankerführungshülse 142 dient zugleich als Federsitz für eine Kegelfeder 162, deren oberes Ende am Endabschnitt 154 der Führungs/Anschlaghülse 146 angreift und letztere sowie den mit ihr verbundenen Anker 144 in die in der linken Hälfte von Figur 5 gezeigte Bereitschaftsstellung vorspannt. Da der Endabschnitt 154 am Ringteil 156 angreift, befindet sich die Fühlplatte 150 in dieser Ruhestellung des Sedimenthöhen-Fühlers 134 (Magnetspule 140 nicht erregt) in einer angehobenen Stellung.

Wird die Magnetspule 140 zur Durchführung einer Pegelmessung erregt, so wird der Anker 144 rasch in das Spuleninnere gezogen, wobei die Führungs/Anschlaghülse 146 mitbewegt wird und die Kegelfeder 162 komprimiert wird. Bei dieser Bewegung wird jedoch der Tragstab 148 nicht mitgenommen. Das durch den Tragstab 148, die Fühlplatte 150, das Ringteil 156 und den Permanentmagneten 158 gebildete Teil bewegt sich jedoch unter Schwerkrafteinwirkung nach unten, wobei diese Bewegung jedoch gedämpft verläuft, da der Gummibalg 152 auseinandergezogen wird, Luft aber nur gedrosselt nachströmen kann, nämlich über die verschiedenen Führungsspalte zwischen den gegeneinander bewegten Teilen, die innerhalb der Ankerführungshülse 142 angeordnet sind, wobei diese Führungsspalte der Balg-Entlüftungs-Öffnung am oberen Ende der Ankerführungshülse 142 strömungsmäßig als Drossel vorgeschaltet sind.

Ist die Höhe des Sedimentes, welches sich über dem Boden des Sedimentierbehälters 94 gebildet hat, klein, so kann die Fühlplatte 150 unbehindert absinken, bis das Ringteil 156 an dem nun abgesenkten Endabschnitt 154 der Führungs/Anschlaghülse 146 anschlägt. Auf dieser Abwärtsbewegung ist der Permanentmagnet 158 am Reed-Schalter 160 vorbei gelaufen, und das Schließen und Wiederöffnen des Reed-Schalters 160 zeigt an, daß der Sedimenthöhen-Fühler 134 ordnungsgemäß arbeitet und die Höhe des gebildeten Sedimentes noch unter dem zulässigen Maximalpegel liegt. Sollte sich dagegen der Tragstab 148 verklemmt haben oder die Energieversorgung der Magnetspule 140 ausfallen, so erhält man nach Einleiten eines Meßzyklus überhaupt kein Schließen des Reed-Schalters 160, was als Anzeige für einen Fehler im Fühler dienen kann.

Ist bei ordnungsgemäß arbeitendem Sedimenthöhen-Fühler 134 die Höhe des Sedimentes auf den maximal zulässigen Wert angewachsen (noch unterhalb des hochgezogenen Bodenabschnittes 106), so kann die Fühlplatte 150 nicht mehr so weit absinken, daß der Permanentmagnet 158 über den Reed-Schalter 160 hinwegbewegt wird. Der Reed-Schalter 160 bleibt somit dauernd geschlossen, und ausgehend von diesem lange aufrecht erhaltenen Schließzustand kann eine Füllstands-Warnanzeige angesteuert und/oder die Energieversorgung der angeschlossenen Arbeitsplätze abgeschaltet werden.

Das Einleiten eines Meßzyklus erfolgt automatisch mit dem ersten Einschalten des Hauptschalters 164 der Zentrifugeneinheit an einem Arbeitstag. Dieser Hauptschalter versorgt die verschiedenen Geräteteile mit Netzspannung, darunter auch ein Netzteil 166 für die verschiedenen elektronischen Komponenten der Steuereinheit 132. Durch die ansteigende Flanke einer der Ausgangsspannungen des Netzteiles 166 wird über eine Verzögerungsstufe 168 eine monostabile Kippstufe 170 angestoßen, deren Ausgangssignal einen Schalter 172 steuert, über welchen die Magnetspule 140 mit Strom versorgt wird. Die Periode der monostabilen Kippstufe 170 ist so bemessen, daß sie bei ordnungsgemäßem Arbeiten des Sedimenthöhen-Fühlers 134 für einen vollständige Meßzyklus auch dann ausreicht, wenn die Fühlplatte 150 bei noch kleiner Sedimenthöhe den vollen Hub absinken muß.

Der Reed-Schalter 160 ist der Zählklemme eines zweistelligen Binärzählers 174 vorgeschaltet. Hat der Binärzähler 174 nach Ablauf eine Meßzylus den Stand "10", so arbeitet der Sedimenthöhen-Fühler 134 ordnungsgemäß, der maximal zulässige Sedimentpegel ist noch nicht erreicht (dieser Zählerstand wird deshalb erreicht, da zu Ende eines Meßzyklus die Erregung der Magnetspule 140 beendet wird und die Kegelfeder 162 den Anker 144 und die Fühlplatte 150 rasch in die Ausgangsstellung zurückbewegt). Ein Zählerstand "01" zeigt an, daß der Fühler ordnungsgemäß arbeitet, der maximal zulässige Sedimentpegel zwischenzeitlich aber erreicht ist. Ein Zählerstand "00" zeigt an, daß ein Fehler im Sedimenthöhen-Fühler 134 vorliegt.

## Patentansprüche

1. Vorrichtung zum Abscheiden von feinen Feststoffpartikeln, insbesondere Amalgampartikeln, aus Abwasser, mit
a) einer durch einen Antriebsmotor (24) in Drehung versetzbaren Zentrifugentrommel (28),
b) einem die Zentrifugentrommel (28) umgebenden Zentrifugengehäuse (50),
c) einem Sedimentierbehälter (94), der lösbar unterhalb des Zentrifugengehäuses (50) angeordnet ist,
d) einer Einrichtung (108-122) zum Rückfördern desjenigen Teiles der im Sedimentierbehälter (94) befindlichen Flüssigkeit, der sich über einem vorgegebenen Pegel befindet, zum Zentrifugeneinlaß (64) hin,
dadurch gekennzeichnet, daß
e) das Zentrifugengehäuse (50) eine Anschlußplatte (98) trägt, gegen welche das offene obere Ende des Sedimentierbehälters (94) anlegbar ist, und
f) die Anschlußplatte (98) einen Sedimenthöhen-Fühler (134) trägt, welcher aufweist: eine auf einen vertikal geführten Tragstab (148) aufgesetzte Fühlplatte (150), einen auf einen oberen Abschnitt des Tragstabes (148) aufgesetzten Anker (144), eine mit dem letzteren zusammenarbeitende Magnetspule (140), einen dem Tragstab (148) zugeordneten Bewegungsdämpfer (142, 144, 152) und einen mit dem Tragstab (148) zusammenarbeitenden Stellungsgeber (158, 160).

2. Vorrichtung nach Anspruch 1, dadurch gekennzeichnet, daß der Anker (144) über eine Totgangverbindung (146, 156) auf den Tragstab (148) arbeitet.

3. Vorrichtung nach Anspruch 2, dadurch gekennzeichnet, daß der Anker (144) mit einer Führungs-Anschlaghülse (146) verbunden ist, welche den Tragstab (148) unter geringem Spiel umgibt und mit einem auskragenden Teil (156) des Tragstabes (148) zusammenarbeitet, und daß die Führungs/Anschlaghülse (146) durch eine Feder (162) in eine obere Stellung vorgespannt ist und durch Anziehen des Ankers (144) durch die Magnetspule (140) schnell absenkbar ist.

4. Vorrichtung nach einem der Ansprüche 1-3, dadurch gekennzeichnet, daß der Rand der Fühlplatte (150) über einen Balg (152) gegen die Anschlußplatte (98) abgedichtet ist und der Balg-Innenraum über die geringes radiales Spiel aufweisenden Führungsmittel für den Tragstab (148) und den Anker (144) über das Fühlergehäuse (138) entlüftet ist, wodurch der Bewegungsdämpfer gebildet ist.

5. Vorrichtung nach einem der Ansprüche 1-4, dadurch gekennzeichnet, daß der Stellungsgeber einen auf dem Tragstab (148) angeordneten Permanentmagneten (158) und einen feststehenden Reed-Schalter (160) aufweist, wobei letzterer so angeordnet ist, daß er vom Permanentmagneten dann ständig geschlossen gehalten wird, wenn der maximal zulässige Sedimentpegel im Sedimentierbehälter (94) erreicht ist.

6. Vorrichtung nach Anspruch 5, dadurch gekennzeichnet, daß der Reed-Schalter (160) der Zählklemme eines Zälers (174) vorgeschaltet ist.

7. Vorrichtung nach einem der Ansprüche 1-6, dadurch gekennzeichnet, daß die Magnetspule (140) in Abhängigkeit vom Einschalten des Hauptschalters (164) der Vorrichtung für eine vorgegebene Zeitspanne (170) erregt wird.

8. Vorrichtung nach Anspruch 7, dadurch gekennzeichnet, daß die Erregung der Magnetspule (140) zusammen mit dem Einschalten des Hauptschalters (164) für eine vorgegebene Zeitspanne erfolgt.

## Claims

1. Device for separating fine solids particles, especially particles of amalgam, from waste water, comprising
a) a centrifuge drum (28) that can be set in rotation by a drive motor (24),
b) a centrifuge housing (50) surrounding the centrifuge drum (28),
c) a sedimentation vessel (94) arranged detachably beneath the centrifuge housing (50),
d) means (108-122) for returning to the centrifuge inlet (64) that portion of the liquid in the sedimentation vessel (94) which is above a given level,
**characterised in that**
e) the centrifuge housing (50) carries a connecting plate (98) against which the open, upper end of the sedimentation vessel (94) can be placed, and
f) the connecting plate (98) carries a sediment height sensor (134) which comprises: a sensor plate (150) located on a vertically guided carrying rod (148), an armature (144) located on an upper portion of the carrying rod (148), a magnet coil (140) cooperating with the armature (144), a movement damper (142, 144, 152) assigned to the carrying rod (148), and a position indicator (158, 160) cooperating with the carrying rod (148).

2. Device according to claim 1, characterised in that the armature (144) operates on the carrying rod (148) via a one-way motion connection (146, 156).

3. Device according to claim 2 , characterised in that the armature (144) is connected to a guide-stop sleeve (146) which surrounds the carrying rod (148) with a small degree of clearance and cooperates with a projecting part (156) of the carrying rod (148), and the guide/stop sleeve (146) is biased by a spring (162) into an upper position and can be lowered rapidly by drawing the armature (144) through the magnet coil (140).

4. Device according to any one of claims 1 to 3, characterised in that the edge of the sensor plate (150) is sealed with respect to the connecting plate (98) via bellows (152), and the interior of the bellows is vented through the sensor housing (138) via the guide means for the carrying rod (148) and the armature (144), which guide means have a small degree of radial clearance, whereby the movement damper is formed.

5. Device according to any one of claims 1 to 4, characterised in that the position indicator comprises a permanent magnet (158), arranged on the carrying rod (148), and a fixed reed switch (160), the latter being so arranged that it is held continuously closed by the permanent magnet when the maximum permissible level of sediment in the sedimentation vessel (94) has been reached.

6. Device according to claim 5, characterised in that the reed switch (160) is connected upstream of the counting terminal of a counter (174).

7. Device according to any one of claims 1 to 6, characterised in that the magnet coil (140) is energised for a given period of time (170) in dependence upon the switching-on of the main switch (164) of the device.

8. Device according to claim 7, characterised in that the magnet coil (140) is energised for a given period of time together with the switching-on of the main switch (164).

## Revendications

1. Dispositif de séparation de particules solides fines, et en particulier de particules d'amalgame des eaux résiduaires, avec
a) un tambour de centrifugeuse (28) pouvant être mis en rotation par un moteur d'entraînement (24),
b) un boîtier de centrifugeuse (50) entourant le tambour de centrifugeuse (28),
c) un réservoir de sédimentation (94) qui est monté de manière amovible en dessous du boîtier de centrifugeuse (50),
d) un dispositif (108-122) pour renvoyer la partie du liquide se trouvant dans le réservoir de sédimentation (94) qui se trouve au-dessus d'un niveau prédéterminé vers l'entrée de la centrifugeuse (64),
caractérisé en ce que
e) le boîtier de centrifugeuse (50) comporte une plaque de raccordement (98) qui peut être montée contre l'extrémité supérieure ouverte du réservoir de sédimentation (94), et
f) la plaque de raccordement (98) supporte un détecteur de hauteur de sédiments (148) qui présente une plaque de détection (150) montée sur une barre porteuse guidée verticalement (148), une ancre (144) montée sur une section supérieure de la barre porteuse (148), une bobine magnétique (140) coopérant avec cette dernière, un amortisseur de déplacement (142, 144, 152) agissant sur la barre porteuse (148) et un indicateur de position (158,160) coopérant avec la barre porteuse (148).

2. Dispositif selon la revendication 1, caractérisé en ce que l'ancre (144) agit sur la barre porteuse (148) par l'intermédiaire d'un assemblage à course morte (146, 156).

3. Dispositif selon la revendication 2 , caractérisé en ce que l'ancre (144) est assemblée à une douille de butée de guidage (146) qui entoure la barre porteuse (148) avec un faible jeu et qui coopère avec une partie en saillie (156) de la barre porteuse (148) et en ce que la douille de butée de guidage (146) est précontrainte par un ressort (162) dans une position supérieure et peut être rapidement abaissée si l'ancre (144) est attirée par la bobine magnétique (140).

4. Dispositif selon l'une des revendications 1 à 3, caractérisé en ce que le bord de la plaque de détection (150) est rendu étanche par un soufflet (152) par rapport à la plaque de raccordement (198) et que l'enceinte intérieure du soufflet est mise en contact avec l'atmosphère par l'intermédiaire du moyen de guidage pour la barre porteuse (148) présentant un faible jeu radial, et l'ancre (144) est mise en contact avec l'atmosphère par le boîtier de capteur (138), ce qui crée l'amortisseur de déplacement.

5. Dispositif selon l'une des revendications 1 à 4, caractérisé en ce que l'indicateur de position présente un aimant permanent (158) disposé sur la barre porteuse (148) et un commutateur fixe à contact scellé (160), ce dernier étant disposé de façon qu'il soit maintenu fermé en permanence par l'aimant permanent si le niveau de sédiments maximal admissible est atteint dans le réservoir de sédimentation (94).

6. Dispositif selon la revendication 5, caractérisé en ce que le commutateur à contact scellé (160) est monté avant la borne de comptage d'un compteur (174).

7. Dispositif selon l'une des revendications 1 à 6, caractérisé en ce que la bobine magnétique (140) est excitée en fonction de l'enclenchement du commutateur principal (164) du dispositif pendant une période de temps prédéterminée (170).

8. Dispositif selon la revendication 7, caractérisé en ce que l'excitation de la bobine magnétique (140) se produit en même temps que l'enclenchement du commutateur principal (164), pendant une période de temps prédéterminée.
